# FASCICULE DE BREVET EUROPEEN

(11) **EP 0 792 779 B1**
(45) Date de publication et mention de la délivrance du brevet: **12.09.2001**
(21) Numéro de dépôt: 97400449.1
(22) Date de dépôt: 27.02.1997
(51) Int. Cl.: B60S 1/26, F16H 1/22, F16H 1/16

(54) **Motoréducteur, notamment pour l'entraînement de bras d'essuie-glace dans un véhicule automobile**
Motorgetriebe zum Antrieb des Armes eines Kraftfahrzeugscheibenwischers
Motor gear-box for driving the arm of a windscreen wiper of a vehicle

(30) Priorité: 29.02.1996 FR 9602574
(43) Date de publication de la demande: 03.09.1997
(73) Titulaire: VALEO SYSTEMES D'ESSUYAGE, 78321 La Verrière (FR)
(72) Inventeur: Gerrand, Dominique, 86540 Thure (FR); Moreau, Bruno, 86190 Quincay (FR)
(74) Mandataire: Le Forestier, Eric

(56) Documents cités:
- FR-A- 2 449 006
- FR-A- 2 455 221
- FR-A- 2 488 359
- FR-A- 2 492 027
- FR-A- 2 507 276

## Description

La présente invention a trait d'une façon générale aux motoréducteurs, notamment pour l'entraînement des bras d'essuie-glace d'un véhicule automobile.

On connaît déjà par le document FR-A-2 455 221 un motoréducteur comportant entre un arbre menant entraîné par un moteur et un arbre mené, une transmission à engrenages comportant au moins une vis sans fin solidaire de l'arbre menant et engrenant avec une première denture d'un pignon intermédiaire, tandis qu'une seconde denture du pignon intermédiaire engrène avec un pignon mené solidaire de l'arbre mené.

Dans ce document, la vis sans fin coopère avec une première denture du pignon intermédiaire qui est hélicoïdale, et il en résulte un effort dont une composante axiale importante sollicite le pignon dans une direction telle qu'il tend à s'éloigner du flasque sur lequel il est monté pivotant.

En corrollaire, ce document prévoit qu'un couvercle du réducteur tient lieu de moyen de butée pour éviter un déplacement excessif du pignon intermédiaire dans le sens indiqué.

Il en résulte la nécessité de recourir à un couvercle suffisamment robuste et rigide, ce qui oblige à le réaliser en métal d'une certaine épaisseur. Ceci accroît le coût de revient du motoréducteur.

En outre, un doigt qui est prévu en coopération avec le pignon intermédiaire pour réaliser l'appui contre ledit couvercle constitue une pièce supplémentaire qui complique l'assemblage du motoréducteur et accroît également son coût de revient.

Le document FR-A-2 488 359 divulge un motoréducteur conforme au préambule de la revendication 1.

La présente invention vise à pallier ces inconvénients de l'état de la technique et à proposer un motoréducteur dans lequel le couvercle n'ait plus à tenir lieu de moyen de butée contre un déplacement de pignon, pour pouvoir notamment être réalisé de façon beaucoup plus économique, et dans lequel la structure du réducteur soit simplifiée.

Un autre objet de la présente invention est de proposer un motoréducteur dont les bruits de fonctionnement soient réduits, et dont les a-coups en cours de fonctionnement soient sensiblement atténués.

Ainsi la présente invention propose un motoréducteur, conforme à la revendication 1.

Des aspects préférés, mais non limitatifs, du dispositif selon l'invention sont énoncés dans les autres revendications

D'autres aspects, buts et avantages de la présente invention apparaîtront mieux à la lecture de la description détaillée suivante de formes de réalisation préférées de celle-ci, donnée à titre d'exemple et faite en référence au dessin annexé, sur lequel :
la figure 1 est une vue partielle en perspective arrachée et éclatée d'un motoréducteur selon l'invention,
la figure 2 est une vue de face partiellement en plan et partiellement en coupe du motoréducteur de la figure 1, avec des sens de rotation et des sens de dentures inversés, et
la figure 3 est une vue de profil partiellement en plan et partiellement en coupe du motoréducteur de la figure 2.

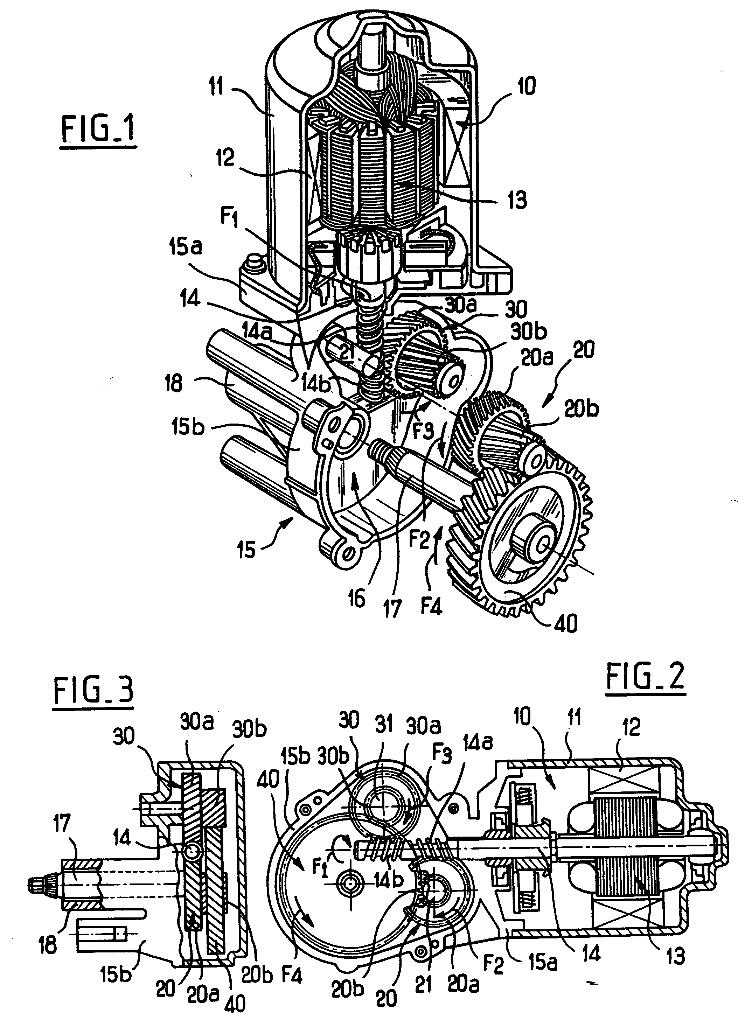

En référence à la figure 1, on a représenté un motoréducteur, en l'espèce pour des bras d'essuie-glace d'un véhicule automobile, qui comprend un moteur électrique d'entraînement 10 logé dans un carter 11. Ce moteur, à courant continu, comprend classiquement un stator 12 et un rotor 13 dont l'arbre 14 qui fait saillie à partir du rotor porte deux vis sans fin 14a, 14b adjacentes, de sens opposés et de même pas.

Le motoréducteur comprend également un socle 15 en alliage léger, qui comporte un premier flasque 15a venant s'adapter sur la partie d'extrémité du stator côté vis sans fin, et un second flasque 15b qui constitue une partie d'un boîtier d'un réducteur à engrenages associé au moteur.

Ce flasque 15b définit un logement 16 dont l'orientation générale est perpendiculaire au plan du flasque 15a, qui est traversé par l'arbre 14 de sortie du moteur (arbre menant) et qui abrite des organes de transfert rotatifs entre cet arbre 14 un arbre 17 de sortie du réducteur (arbre mené), qui traverse un palier allongé 18 formé dans le fond du logement 16.

Les organes de transfert rotatifs comprennent un pignon 20 monté rotatif sur un pivot 21 défini par le flasque et comportant une première denture 20a et une seconde denture 20b, coaxiales.

La première denture 20a, de plus grand diamètre, coopère avec la vis sans fin 14a la plus proche du rotor.

Il est également prévu un pignon 30 identique au pignon 20 et monté de la même manière sur un pivot 31.

Une première denture 30a de ce pignon 30 coopère avec l'autre vis sans fin 14b de l'arbre de sortie du moteur.

De façon connue en soi, les dentures 20a, 30a qui coopèrent avec les vis sans fin 14a, 14b sont hélicoïdales, avec des sens d'hélice opposés.

Les secondes dentures 20b, 30b des pignons 20, 30, de diamètre plus petit, engrènent avec la denture périphérique d'un pignon 40 solidaire de l'arbre de sortie 17 du réducteur.

Selon la présente invention, les deuxièmes dentures 20b, 30b des pignons 20, 30, et en corrollaire la denture du pignon 40, sont également hélicoïdales, les dentures 20b, 30b présentant la même orientation.

On observe ainsi que sur le pignon 30, le sens de l'hélice des dentures 30a et 30b est le même, tandis que sur le pignon 20, les sens d'hélice des deux dentures 20a et 20b sont opposés.

On va maintenant décrire le comportement du réducteur en termes de sollicitations axiales.

L'engrènement de la vis sans fin 14a avec la denture 20a du pignon 20, compte-tenu de l'orientation de ladite denture et du sens de rotation de l'arbre 14 indiqué par la flèche F1, exerce sur ce pignon 20 une sollicitation dont la composante axiale tend à le maintenir contre le flasque 15b. Le pignon 30 tourne dans le sens indiqué par la flèche F3.

Dans le même temps, la denture hélicoïdale 20b, en entraînant le pignon 40 dans le sens de la flèche F4, soumet le pignon 20 à une sollicitation de réaction dont la composante axiale présente la même orientation. Le pignon 20 est donc globalement soumis à deux efforts axiaux de même sens qui permettent d'éviter que celui-ci s'écarte du flasque 15b.

L'engrènement de la vis sans fin 14b avec la denture 30a du pignon 30, pour l'entraîner en rotation dans le sens de la flèche F2, provoque un effort dont la composante axiale tend à l'écarter du flasque 15b.

Dans le même temps, la denture hélicoïdale 30b qui entraîne le pignon 40 de la même manière que la denture 20b du pignon 20, soumet ledit pignon 30 à un effort de réaction dont la composante axiale est de sens inverse de celle exercée par la vis sans fin 14b sur la denture 30a.

On comprend donc que ces deux efforts axiaux se contrebalancent. Ainsi, en choisissant convenablement l'obliquité des dentures 20b, 30b des pignons 20, 30 et l'obliquité correspondante de la denture du pignon 40, on peut faire en sorte que l'effort de réaction exercé par le pignon 40 sur le pignon 30 soit au moins égal en amplitude, et de préférence légèrement supérieur, à l'effort exercé par la vis sans fin 14. De la sorte la composante axiale globalement exercée sur le pignon 30 tend à maintenir celui-ci contre le flasque 15b. En conséquence, les moyens de butée prévus dans le document FR-A-2 455 221 précité peuvent être omis, ce qui simplifie sensiblement la construction du réducteur.

En outre, du fait que, contrairement au document précité, le couvercle 50 du flasque n'a plus à jouer le rôle d'un organe de butée de pignon, sa robustesse et sa rigidité ne sont plus critiques à cet égard. Ceci permet en particulier de réaliser ce couvercle en matière plastique moulée, ce qui diminue le coût global du motoréducteur.

Il est également important de noter que le fait d'utiliser des dentures hélicoïdales pour les secondes dentures 20b, 30b des pignons 20, 30 et pour la denture du pignon 40 permet de diminuer sensiblement les bruits de fonctionnement, et permet en outre, notamment lors des démarrages et arrêts du motoréducteur, de diminuer les à-coups grâce à une coopération plus progressive entre les dents.

Enfin on observera que la forme des secondes dentures des pignons 20, 30 et de la denture du pignon 40 permet une meilleure tenue mécanique, de par l'accroissement des surfaces des dents coopérant en cisaillement.

Bien entendu, la disposition d'ensemble peut être symétrisée par rapport à ce qui a été illustré sur la figure 1, et ceci a été illustré schématiquement sur les figures 2 et 3.

La présente invention n'est nullement limitée aux formes de réalisation décrites et représentées, mais l'homme du métier saura imaginer toute variante ou modification conforme à son esprit.

## Revendications

1. Motoréducteur, notamment pour l'entraînement des bras d'essuie-glace d'un véhicule automobile, comportant entre un arbre menant (14) entraîné par un moteur (10) et un arbre mené (17), une transmission à engrenages comportant une première vis sans fin (14b) solidaire de l'arbre menant (14) et engrenant avec une première denture (30a) d'un premier pignon intermédiaire (30), le premier pignon intermédiaire engrénant avec un pignon mené (40) solidaire de l'arbre mené (17), au moyen de dentures du premier pignon intermédiaire et du pignon mené généralement hélicoïdales, avec une orientation telle que le pignon mené (40) sollicite axialement le premier pignon intermédiaire (30) dans une direction opposée à une sollicitation axiale exercée par la vis sans fin (14b) sur le premier pignon intermédiaire (30), le motoréducteur comprenant un second pignon intermédiaire (20) comportant une première denture hélicoïdale (20a) engrenant avec une seconde vis sans fin (14a) solidaire de l'arbre menant **caractérisé en ce que** la denture (30b) du premier pignon intermédiaire (30) engrénant avec la denture du pignon mené est une seconde denture, le second pignon intermédiaire (20) présentant une seconde denture (20b), hélicoïdale, engrenant avec avec le pignon mené (40) et ayant un sens d'hélice opposé à celui de la première denture (20a) du second pignon intermédiaire (20).

2. Motoréducteur selon la revendication 1, **caractérisé en ce que** la première denture (30a) du premier pignon intermédiaire (30) est également hélicoïdale, avec un sens d'hélice identique à celui de sa seconde denture (30b).

3. Motoréducteur selon la revendication 2, **caractérisé en ce que** les inclinaisons respectives, des première et seconde dentures (30a, 30b) du premier pignon intermédiaire (30) sont choisies de manière à ce que l'amplitude de la sollicitation axiale exercée par le pignon mené (40) sur le premier pignon intermédiaire (30) soit supérieure ou égale à l'amplitude de la sollicitation axiale exercée par la vis sans fin (14b) sur le premier pignon intermédiaire (30).

4. Motoréducteur selon l'une des revendications 1 à 3, **caractérisé en ce qu'**il comporte un flasque (15b) et deux pivots (31,21) fixés au flasque et sur lesquels sont montés respectivement les premier et second pignons intermédiaires (30,20).

## Patentansprüche

1. Getriebemotor, insbesondere für den Antrieb der Scheibenwischerarme eines Kraftfahrzeugs, der zwischen einer durch einen Motor (10) angetriebenen Antriebswelle (14) und einer getriebenen Welle (17) ein Zahnradgetriebe umfaßt, das wenigstens eine Schnecke (14b) enthält, die fest mit der Antriebswelle (14) verbunden ist und an einer ersten Zahnung (30a) eines ersten Zwischenritzels (30) eingreift, wobei das erste Zwischenritzel an einem fest mit der getriebenen Welle (17) verbundenen getriebenen Ritzel (40) anhand von Zahnungen des ersten Zwischenritzels und des getriebenen Ritzels eingreift, die allgemein Schrägzahnungen mit einer Ausrichtung sind, die so verläuft, daß das getriebene Ritzel (40) das erste Zwischenritzel (30) axial in einer Richtung entgegengesetzt zu einer axialen Beanspruchung beaufschlagt, die durch die Schnecke (14b) auf das erste Zwischenritzel (30) ausgeübt wird, wobei der Getriebemotor ein zweites Zwischenritzel (20) enthält, das eine erste Schrägzahnung (20a) umfaßt, die an einerzweite fest mit der treibenden Welle verbundenen Schnecke (14a) eingreift, **dadurch gekennzeichnet**, daß die Zahnung (30b) des ersten Zwischenritzels (30), die an der Zahnung des getriebenen Ritzels eingreift, eine zweite Zahnung ist, wobei das zweite Zwischenritzel (20) eine zweite Schrägzahnung (20b) aufweist, die an dem getriebenen Ritzel (40) eingreift, und eine Steigungsrichtung hat, die zu derjenigen der ersten Zahnung (20a) des zweiten Zwischenritzels (20) entgegengesetzt ist.

2. Getriebemotor nach Anspruch 1, **dadurch gekennzeichnet**, daß die erste Zahnung (30a) des ersten Zwischenritzels (30) ebenfalls eine Schrägzahnung mit einer Steigungsrichtung ist, die mit derjenigen seiner zweiten Zahnung (30b) identisch ist.

3. Getriebemotor nach Anspruch 2, **dadurch gekennzeichnet**, daß die Neigungen der ersten und zweiten Zahnungen (30a, 30b) des ersten Zwischenritzels (30) so gewählt sind, daß die Stärke der durch das getriebene Ritzel (40) auf das erste Zwischenritzel (30) ausgeübten axialen Beanspruchung größer oder gleich der Stärke der durch die Schnecke (14b) auf das erste Zwischenritzel (30) ausgeübten axialen Beanspruchung ist.

4. Getriebemotor nach einem der Ansprüche 1 bis 3, **dadurch gekennzeichnet**, daß er einen Flansch (15b) und zwei Lagerzapfen (31, 21) umfaßt, die am Flansch befestigt sind und an denen die ersten und zweiten Zwischenritzel (30, 20) angebracht sind.

## Claims

1. A motorised reduction gear unit, especially for driving screen wiper arms of a motor vehicle, comprising, between a driving shaft (14) driven by a motor (10) and a driven shaft (17), a gear train comprising a first worm (14b) fixed to the driving shaft (14) and meshing with a first set of teeth (30a) of a first intermediate pinion (30), the first intermediate pinion meshing with a driven pinion (40) fixed to the driven shaft (17), by means of sets of teeth of the first intermediate pinion and driven pinion, which are generally of helical form, with an orientation such that the driven pinion (40) urges the first intermediate pinion (30) axially in a direction which is opposed to an axial force which is exerted by the worm (14b) on the first intermediate pinion, the motorised reduction gear unit including a second intermediate pinion (20) having a helical first set of teeth (20a) meshing with a second worm (14a), which is fixed to the driving shaft,
**characterised in that** the set of teeth (30b) of the first intermediate pinion (30), meshing with the teeth of the driven shaft, is a second set of teeth, the second intermediate pinion (20) having a helical second set of teeth (20b) meshing with the driven pinion (40) and having its helix direction opposed to that of the first set of teeth (20a) of the second intermediate pinion (20).

2. A motorised reduction gear unit according to Claim 1, **characterised in that** the first set of teeth (30a) of the first intermediate pinion (30) is also helical, with a helix direction identical to that of the second set of teeth (30b).

3. A motorised reduction gear unit according to Claim 2, **characterised in that** the respective inclinations of the first and second sets of teeth (30a, 30b) of the first intermediate pinion (30) that the amplitude of the axial force exerted by the driven pinion (40) on the first intermediate pinion (30) is greater than or equal to the amplitude of the axial force exerted by the worm (14b) on the first intermediate pinion (30).

4. A motorised reduction gear unit according to one of Claims 1 to 3, **characterised in that** it includes a radial plate (15b) and two pivots (31, 21), which are fixed to the radial plate, and on which the first and second intermediate pinions (30, 20) are mounted, respectively.
